# EUROPÄISCHE PATENTSCHRIFT

(11) **EP 0 450 457 B1**
(45) Veröffentlichungstag und Bekanntmachung des Hinweises auf die Patenterteilung: **30.11.1994**
(21) Anmeldenummer: 91104714.0
(22) Anmeldetag: 26.03.1991
(51) Int. Cl.: A47J 37/08

(54) **Brotröster mit einer Nachhebevorrichtung für den Röstgutträger**
Toaster with a lifting device for the bread carrier
Grille-pain avec un dispositif de levage pour le porte-pain

(30) Priorität: 04.04.1990 DE 4010779
(43) Veröffentlichungstag der Anmeldung: 09.10.1991
(73) Patentinhaber: Braun Aktiengesellschaft, Frankfurt am Main (DE)
(72) Erfinder: Ott, Gabriele, W-6240 Königstein (DE); Pfeiffer, Bernd, W-6370 Oberursel 5 (DE); Schamberg, Stefan, W-6390 Usingen (DE); Kurth, Karl, W-6392 Neu-Anspach (DE)

(56) Entgegenhaltungen:
- DE-A- 2 942 890
- US-A- 2 667 116
- US-A- 2 750 876

## Beschreibung

Die Erfindung betrifft einen Brotröster mit einem durch eine Handhabe manuell zwischen einer oberen und unteren Endlage in eine Führung verschiebbaren Schlitten, mit einem zusammen mit dem Schlitten sich bewegenden Röstgutträger, auf dem ein Röstgut aufgelegt werden kann, wobei die obere Endlage des Schlittens zum Einlegen bzw. zum Entnehmen des Röstgutes vorgesehen ist, während die untere Endlage zum Einschalten und zum Rösten des Röstgutes dient und mit einer Nachhebevorrichtung, mit der über einen gesonderten Bedienknopf der Röstgutträger gegenüber dem Schlitten angehoben werden kann, wobei die Nachhebevorrichtung vom Schlitten getragen wird.

In der Deutschen Industrienorm für "Elektrische Haushalt-Brotröster mit und ohne Brötchenaufsatz", DIN 44 542, wird vorgeschrieben, daß "nach dem Bereitstellen zum Entnehmen die gerösteten Toastbrotscheiben ohne Hilfsmittel gefaßt werden können müssen. Diese Forderung gilt als erfüllt, wenn jede Toastbrotscheibe in ihrer günstigsten Lage nach dem Bereitstellen zum Entnehmen mindestens 30 mm aus dem Röstraum herausragt. Dabei muß die Entnahmevorrichtung so arbeiten, daß die Toastbrotscheiben nicht aus dem Röstraum herausgeworfen werden".

Diese DIN-Forderung wird bei den herkömmlichen Brotröstern nur dann erfüllt, wenn die im Handel gebräuchlichen Toastbrotscheiben verwendet werden. Möchte aber eine Bedienungsperson Graubrot von besonders kleinen Abmessungen, beispielsweise die Endstücke, toasten, so ragen diese nach dem Bereitstellen zum Entnehmen in der Regel nicht mindestens 30 mm aus dem Röstraum heraus. Oft liegen sie sogar noch vollständig im Röstraum des Brotrösters.

Um auch für diesen Fall Abhilfe zu schaffen, ist aus der US-A-2 667 116 ein Brotröster bekannt, bei dem bereits die Nachhebevorrichtung vom Schlitten und vom Röstgutträger getragen wird. Dabei ist der Röstgutträger über einen ersten und zweiten Hebel mit der den Röstgutträger in seiner Höhe verstellbaren Handhabe verbunden, wobei der erste Hebel über ein erstes Drehgelenk mit dem Röstgutträger und der zweite Hebel über ein zweites Drehgelenk mit dem ersten Hebel verbunden sind. Im normalen Betrieb stützt sich der Röstgutträger über an ihm winklig hervorstehende Finger am ersten Hebel ab, wobei die Finger gleichzeitig als Auflage des Röstgutes dienen.

Soll durch Anheben der einzigen Handhabe die Nachhebevorrichtung betätigt werden, so dreht sich der erste Hebel einerseits um das zweite Gelenk zwischen dem ersten und zweiten Hebel und andererseits um das erste Gelenk zwischen dem ersten Hebel und dem Röstgutträger, da das freie Ende des ersten Hebels an einem mit dem Gehäuse des Brotrösters verbundenen und senkrecht verlaufenden Blechteil gehalten wird. Die Nachhebevorrichtung ist also nur so lange wirksam, solange die Handhabe von einer Bedienungsperson an dem gehäusefesten Anschlag gehalten wird. Aufgrund dieser Konstruktion müssen mit der einzigen Handhabe zwei Bedienschritte durchgeführt werden, nämlich, wenn die Handhabe heruntergedrückt wird, wird der Röstgutträger in seine Röststellung gebracht und wenn die Handhabe von ihrer Ausgangsstellung nach oben gegen den gehäusefesten Anschlag verschoben wird, wird die Nachhebevorrichtung betätigt.

Weiterhin ist aus der DE-29 42 890 A1 ein Brotröster der eingangs beschriebenen Art bekannt, der zusätzlich zur Hebevorrichtung noch eine Nachhebevorrichtung aufweist, die immer dann Anwendung findet, wenn nach dem Bereitstellen zum Entnehmen des Röstgutes dieses nicht mindestens 30 mm aus dem Röstraum herausragt. Mit dieser Nachhebevorrichtung können also nach dem Bereitstellen zum Entnehmen des Röstgutes derartige Röstgutscheiben, die nur geringfügig oder gar nicht aus dem Röstraum herausragen zusätzlich nochmals angehoben, so daß sie dann weit genug aus dem Röstraum herausragen und von Hand leicht dem Röstraum und somit dem Brotröster entnommen werden können.

Bei diesem Brotröster besteht die Nachhebevorrichtung aus einem an der gegenüberliegenden Seite der Handhabe am Gehäuse des Brotrösters ausgebildeten gesonderten Bedienknopf, der mit seinem Übertragungshebel unter den auf dem Schlitten aufliegenden Röstgutträger greift, um In der Entnahmestellung des Schlittens den Röstgutträger unabhängig vom Schlitten nach oben weiter anzuheben. Dadurch, daß sich beim Betätigen der Nachhebevorrichtung ständig die wirksame Länge des Übertragungshebels ändert, ändert sich auch das Angriffsmoment am Bedienknopf, was zu einem unkontrollierten Anheben des Röstgutträgers führt, so daß letztendlich die Brotscheiben aus dem Schacht herausgeschleudert werden können.

Dadurch, daß die Handhabe und der Bedienknopf, an gegenüberliegenden Seitenflächen des Brotrösters angeordnet sind, wird die Funktionalität und die Handhabung des Brotrösters nachteilig beeinträchtigt, da eine Bedienungsperson den Bedienknopft mit der Handhabe leicht verwechseln kann.

Aufgabe der Erfindung ist es daher, einen Brotröster mit einer Handhabe für den Röstbetrieb und mit einem gesonderten Bedienungsknopf für die Nachhebevorrichtung zu schaffen, bei dem der Kraft- bzw. Momentenangriff am Bedienknopf immer der gleiche ist und bei dem trotz klarer Funktionstrennung von Handhabe und Bedienknopf beide Elemente leicht bedient werden können. Gleichzeitig soll bei der Betätigung der Nachhebevorrichtung nicht das Röstgut aus dem Schacht fallen.

Diese Aufgabe wird durch die Merkmale des Patentanspruchs 1 gelöst.

Durch die erfinderische Maßnahme ergibt sich der Vorteil, daß die Abstützkräfte der Nachhebevorrichtung, durch die der Röstgutträger in die obere Totpunktposition gebracht und dort gehalten wird, auf den Schlitten abgestützt werden. Ein Verklemmen wird hierdurch weitgehendst vermieden. Auch kann die Nachhebevorrichtung am Röstgutträger befestigt sein, welcher sich wiederum am Schlitten abstützt.

Durch die Erfindung ergibt sich weiterhin der Vorteil, daß der Bedienknopf für die Betätigung der Nachhebevorrichtung und die Handhabe für die Betätigung des Röstgutträgers auf einer Seite des Brotrösters angeordnet sind. Eine Bedienungsperson findet also den Bedienknopf und die Handhabe an ein und derselben Stelle am Brotröster und muß keine umständlichen Handbewegungen ausführen, um von der Handhabe zum Bedienknopf zu gelangen. Zur Betätigugn der Nachhebevorrichtung wird am Bedienknopf eine nahezu konstante Kraft benötigt, so daß ein besonders gleichmäßiges Anheben des Toastbrotes möglich ist. Auch bei schneller Betätigung des Bedienknopfes kann das Toastbrot nicht aus dem Schacht fallen, da die Bewegung des Röstgutträgers nach oben einerseits begrenzt ist und andererseits die Bewegung der Handhabe kontrolliert durchgeführt werden kann.

Durch die Weiterbildung der Merkmale nach Anspruch 2 wird eine einfache mechanische Kopplung zwischen dem Schlitten und dem Röstgutträger erreicht. Durch die Führung des ersten und zweiten Halters auf einer gemeinsamen Führungsstange zu beiden Seiten des Röstgutträgers und des Schlittens ergibt sich eine besonders verklemmungsfreie und einfach mit dem Schlitten gekoppelte Nachhebevorrichtung.

Nach den Merkmalen des Anspruchs 3 läßt sich infolge des einzigen Hebelarmes der Bedienknopf der Nachhebevorrichtung parallel zur Bewegungsrichtung der Handhabe senkrecht nach oben verschieben.

Die erste Ausführungsform nach der Erfindung vermeidet also ein Hebelgetriebe und ist deshalb besonders einfach herstellbar, da beim Anheben des Bedienknopfes auch in gleichem Maße der Röstgutträger angehoben wird. Allerdings können dabei größere Betätigungskräfte auftreten.

In einer zweiten Ausführungsform der Erfindung nach Anspruch 4 ergibt sich der Vorteil, daß der Bedienknopf ortsfest aber drehbar in der Handhabe geführt ist. Durch diese Anordnung ergibt sich auch der Vorteil, daß die Handhabe und der Bedienknopf zur besseren Unterscheidung in verschiedenen Richtungen bedient werden müssen, nämlich eine senkrechte Bewegung an der Handhabe und eine Drehbewegung am Bedienknopf.

Eine besonders gute Kraftübertragung vom Bedienknopf zum Röstgutträger wird bei dem zweiten Ausführungsbeispiel durch die Merkmale des Anspruchs 5 erreicht.

In einem dritten Ausführungsbeispiel der Erfindung nach Anspruch 6 wird anstatt einer Verzahnung, wie im zweiten Ausführungsbeispiel, ein in ein Langloch eingreifender Gelenkbolzen gewählt.

Eine besonders stabile Lagerung des Bedienknopfs bei den beiden letzten Ausführungsbeispielen wird durch die Merkmale des Anspruchs 7 erreicht.

Damit sich die Halter nicht in den Führungsstangen verdrehen können, sind die Merkmale des Anspruchs 8 vorgesehen.

Damit die Nachhebevorrichtung während des Röstvorganges nicht verstellt werden kann, wird gemäß den Merkmalen des Anspruchs 9 beim Toastvorgang der Bedienknopf der Nachhebevorrichtung von der Außenwand des Gehäuses verdeckt, bzw. der Bedienknopf gelangt bei Betätigung der Handhabe in eine von außen nicht zugängliche Ausnehmung.

Durch die Merkmale des Anspruchs 10 ergibt sich der Vorteil, daß der Zugriff auch zum Bedienknopf aufgrund seiner Integration in die Handhabe äußerst bedienungsfreundlich und übersichtlich ist.

Drei Ausführungsformen der Erfindung werden nachfolgend anhand der Zeichnung näher erläutert. Es zeigen:
- Fig. 1: eine perspektivische Darstellung einer ersten Ausführungsform einer Nachhebevorrichtung nach der Erfindung, die durch einen parallel zum Schlitten verschliebbaren Hebel betätigt wird,
- Fig. 2: eine perspektivische Darstellung einer zweiten Ausführungsform einer Nachhebevorrichtung, die ein Hebelgetriebe mit einer Verzahnung aufweist und
- Fig. 3: eine perspektivische Darstellung einer dritten Ausführungsform einer Nachhebevorrichtung, die ein Drehschubgelenk mit einer Zapfen-Langlochführung aufweist.

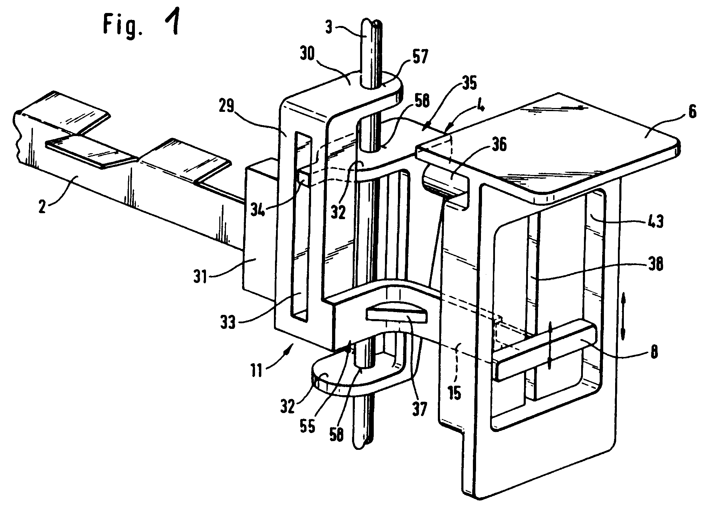

Wie aus den Figuren 1 bis 3 ersichtlich, sind am Gehäuse 1 eines Brotrösters parallel zueinander verlaufende Führungen 3 für einen Röstgutträger 2 und einen Schlitten 4 vorgesehen, wobei letzterer über eine Handhabe 6 manuell zwischen einer oberen und unteren Endlage verschiebbar ist. Zur Einleitung des Röstvorgangs wird der Schlitten 4 mit der Handhabe 6 in seine untere Endlage gebracht. Ein Antrieb, beispielsweise in Form einer Feder bringt den Schlitten 4 nach Ablauf des Röstvorgangs aus seiner unteren in seine obere Endlage. Mit der Bewegung des Schlittens 4 in seine obere Endlage wird gleichzeitig der Röstgutträger 2 angehoben, damit das Röstgut (nicht dargestellt) dem Brotröster entnommen werden kann. Der Röstgutträger 2 ist in jeder Lage des Schlittens 4 gegenüber diesem noch weiter anhebbar.

Ist ein Röstgut größerer Abmessungen eingelegt, so kann dieses nach Beendigung des Röstvorgangs ohne zusätzliches Anheben des Röstgutträgers 2 der Ausgabeöffnung (nicht dargestellt) des Brotrösters entnommen werden. Handelt sich es dagegen um ein Röstgut mit derartig kleinen Abmessungen, daß dessen Ergreifen auch in der oberen Endlage des Schlittens 4 nicht möglich ist, ermöglicht erst das zusätzliche Anheben des Röstgutträgers 2 dessen Entnahme. Bei den in den Figuren 1 bis 3 gezeigten Ausführungsformen der Erfindung erfolgt dies über eine Nachhebevorrichtung 11.

Nach Fig. 1 ist der Röstgutträger 2 über ein Zwischenstück 31, einen ersten Halter 29 und den Hebelarm 15 mit dem Bedienknopf 8 für die Nachhebevorrichtung 11 mechanisch verbunden. Eine Verstärkung 37 sichert den Hebelarm 15 an dem ersten Halter 29. Der erste Halter 29 weist zwei Bügelarme 30 auf (in Fig. 1 nur einer erkennbar), die auf der Führungsstange 3 über Bohrungen 57 gleitend geführt sind. Die Bügelarme 30 bilden zusammen mit dem Halter 29 ein U-förmiges Gebilde, an dem der Röstgutträger 2 befestigt ist. In der soweit beschriebenen Anordnung könnte der Röstgutträger 2 über den Bedienknopf 8 entlang der Führung 3 verschoben werden.

Die Handhabe 6 zum Niederdrücken des Schlittens 4 ist über ein Verbindungsstück 36 mit einem zweiten Halter 35 verbunden, der dieselbe U-förmige Gestalt mit Bügel armen 32 wie der erste Halter 29 aufweist. Der zweite Halter 35 läuft gleichfalls über Bohrungen 58 auf der Führung 3. Die Bügelarme 30 und 32 des ersten und zweiten Halters 29 und 35 sind so zueinander angeordnet, daß ein Bügelarm 32 des Halters 35 zwischen die beiden Bügelarme 30 des Halters 29 eingreift, so daß innerhalb der Spannweite der Bügelarme 32 ein axiales Verschieben der beiden Halter 29 und 35 gegeneinander möglich ist.

Bei der Hubbewegung, die der erste Halter 29 gegenüber dem zweiten Halter 35 ausführen kann, werden beide Halter 29, 35 durch einen, in einen Längsschlitz 33 eingreifenden Zapfen 34 gegen eine Verdrehung gesichert. Längsschlitze 33 sind sowohl an dem ersten Halter 29 als auch an dem zweiten Halter 35 (in Fig. 4 nicht erkennbar) ausgebildet. Ebenso sind an beiden Haltern 29, 35 an einander gegenüberliegenden Ende Zapfen 34 (am Halter 29 von Fig. 1 wiederum nicht erkennbar) ausgebildet.

Damit der Bedienknopf 8 und der Hebel 15 innerhalb der Handhabe 6 in Richtung der Führung 3 verschiebbar sind, ist in Fig. 1 eine Längsöffnung 38 für den Hebelarm 15 vorgesehen. Wie Fig. 1 weiter zeigt, ist der Bedienknopf 8 für den Röstgutträger 2 in eine Vertiefung 43 der Handhabe 6 integriert. Der nicht direkte Zugriff zum Bedienknopf 8 sorgt dafür, daß der Benutzer des Brotrösters diese nicht so ohne weiteres versehentlich betätigen kann, wenn er nur Brot ausreichend großer Abmessungen rösten will. Für den Fall, daß der Schlitten 4 durch die Handhabe 6 in Betriebsstellung des Brotrösters gebracht worden ist, ist darüber hinaus der Bedienknopf 8 durch die Gehäusewand (nicht dargestellt) des Brotrösters abgedeckt, so daß eine versehentliche Betätigung der Nachhebevorrichtung 11 ausgeschlossen ist.

Das Zusammenwirken der Halter 29 und 35 mit den parallel zueinander verlaufenden Führungen 3 bewirkt in vorteilhafter Weise ein klemmfreies und leichtes Verschieben des Röstgutträgers 2, wenn ein Röstgut kleinerer Abmessungen zusätzlich angehoben werden soll. Wie Fig. 1 weiter zeigt, müssen der Bedienknopf 8 und die Handhabe 6 aufeinander zubewegt werden, um das Röstgut zusätzlich anzuheben. Zwischen den Bügelarmen 30 und 32 können auf den Führungen 3 Druckfedern (nicht dargestellt) als Anschlagdämpfer ausgebildet sein.

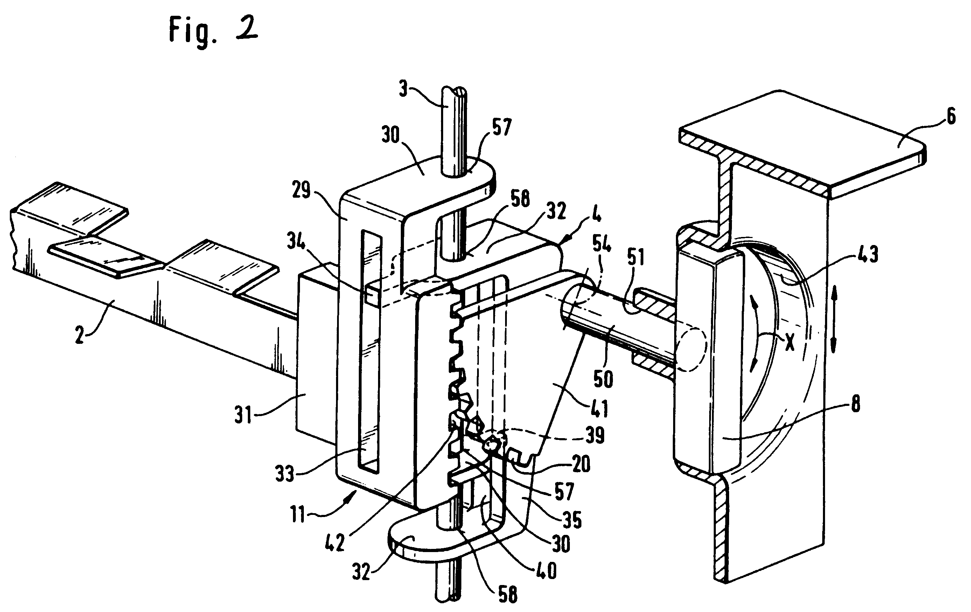

Die zweite Ausführungsform einer Nachhebevorrichtung 11 nach Fig. 2 unterscheidet sich von der in Fig. 1 dargestellten Ausführungsform dadurch, daß zwischen dem ersten Halter 29 und dem Bedienknopf 8 eine Verzahnung 42 ausgebildet ist, die sich geradlinig in Richtung der Führung 3 erstreckt. In die Verzahnung 42 an dem ersten Halter 29 greift eine weitere Verzahnung 20 eines Zahnsegmentes 41 ein. Die Verzahnung 20 des Zahnsegmentes 41 liegt auf einem Kreisbogenabschnitt, an dessen Drehzentrum 54 ein Zapfen 50 angreift, der einerseits im Halter 35 und andererseits in der Handhabe 6 in einer Bohrung 51 drehbar gelagert ist. Das die Bohrung 51 druchdringende Ende des Zapfens 50 ist drehfest mit dem Bedienknopf 8 verbunden.

Bei der Nachhebevorrichtung 11 nach Fig. 2 wird der Bedienknopf 8 durch eine Drehbewegung betätigt. Wird der Bedienknopf 8 im Uhrzeigersinn (Pfeil X) gedreht, hebt das Zahnsegment 41 den ersten Halter 29 entlang der Führung 3 nach oben. Wie in Fig. 2 weiter erkennbar, weisen die beiden Halter 29 und 35 Zapfen 39 und 34 auf, die jeweils in einen am anderen Halter ausgebildeten Längsschlitz 40 bzw. 33 eingreifen.

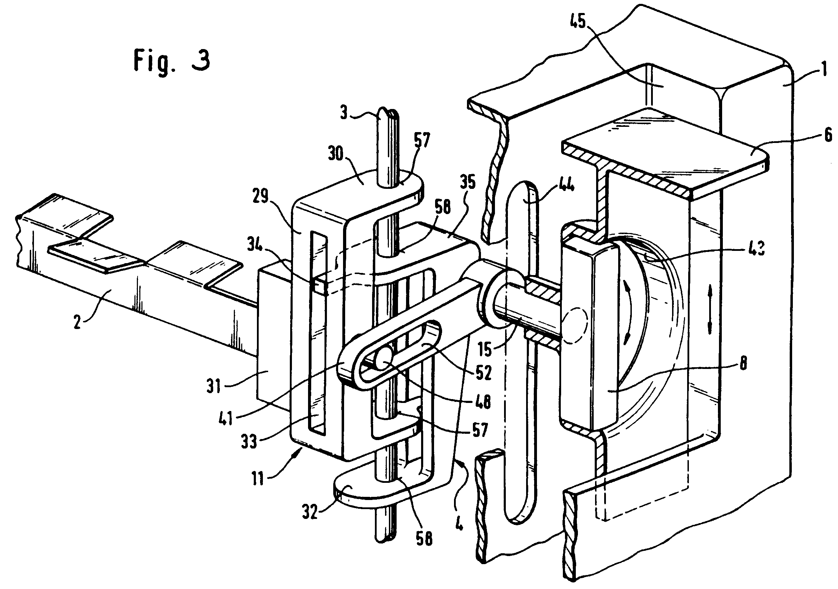

Die dritte Ausführungsform der Erfindung nach Fig. 3 unterscheidet sich von der Ausführungsform nach Fig. 2 dadurch, daß die Kraftübertragung nicht über eine Verzahnung, sondern über eine Bolzen-Langlochverbindung erfolgt, bei der ein an dem ersten Halter 29 befestigter Gelenkbolzen 48 in ein Langloch 52 eingreift.

Damit der Röstguthalter bei seiner Aufwärtsbewegung zum oberen Totpunkt auf das Röstgut keine derartige Beschleunigung ausführen kann, daß es aus dem Röstschacht herausfliegt, ist es vorteilhaft, einen Anschlagdämpfer oder eine federbelastete Spannvorrichtung zwischen dem Röstgutträger und der Hebevorrichtung vorzusehen. Vorzugsweise besteht der Anschlagdämpfer aus einem flexiblen hitzebeständigen Schlauch, beispielsweise aus Silikongewebe, der auf der Führungsstange für den Röstgutträger ausgebildet ist.

Zur Vermeidung von Wiederholungen wurden in den Fig. 1 bis 3 solche Bauteile, die sich hinsichtlich ihrer Funktion entsprechen, mit gleichen Positionsnummern versehen.

## Patentansprüche

1. Brotröster mit einem durch eine Handhabe (6) manuell zwischen einer oberen und unteren Endlage in einer Führung (3) verschiebbaren Schlitten (4), mit einem zusammen mit dem Schlitten (4) sich bewegenden Röstgutträger (2), auf dem ein Röstgut aufgelegt werden kann, wobei die obere Endlage des Schlittens (4) zum Einlegen bzw. zum Entnehmen des Röstgutes vorgesehen ist, während die untere Endlage zum Einschalten und zum Rösten des Röstgutes (22) dient und mit einer Nachhebevorrichtung (11), mit der über einen gesonderten Bedienknopf (8) der Röstgutträger (2) gegenüber dem Schlitten (4) angehoben werden kann, wobei die Nachhebevorrichtung (11) vom Schlitten (4) getragen wird,
**dadurch gekennzeichnet**,
daß der Röstgutträger (2) über einen ersten Halter (29) und der Schlitten (4) über einen zweiten Halter (35) längs der Führung (3) bewegbar sind,
daß die Halter (29, 35) U-förmig ausgebildet sind und an beiden Schenkeln mit Bügelarmen (30 bzw. 32) versehen sind, daß die Bügelarme (30 bzw. 32) auf der Führung (3) derart zueinander angeordnet sind, daß ein Bügelarm (32) des zweiten Halters (35) zwischen die beiden Bügelarme (30) des ersten Halters (29) eingreift, so daß innerhalb der Spannweite der Bügelarme (32) ein axiales Verschieben der beiden Halter (29, 35) gegeneinander möglich ist.

2. Brotröster nach Anspruch 1,
**dadurch gekennzeichnet**,
daß die Nachhebevorrichtung (11) aus einem Hebel (55) besteht, der mit dem ersten Halter (29) fest verbunden ist und daß an dem Hebel (55) der Bedienknopf (8) angebracht ist.

3. Brotröster nach Anspruch 1,
**dadurch gekennzeichnet**,
daß die Nachhebevorrichtung (11) ein am ersten Halter (29) ausgebildetes erstes Eingriffselement (42, 48) aufweist, daß das erste Eingriffselement (42, 48) in ein mit dem Bedienknopf (8) drehbar verbundenes zweites Eingriffselement (41) eingreift und daß das zweite Eingriffselement (41) am Schlitten (4) über einen mit ihm im rechten Winkel verbundenen Zapfen (50) drehbar gelagert ist.

4. Brotröster nach Anspruch 3,
**dadurch gekennzeichnet**,
daß das erste und zweite Eingriffselement (42, 41) von einer im wesentlichen In Richtung der Führung (3) verlaufenden Verzahnung gebildet wird.

5. Brotröster nach Anspruch 3,
**dadurch gekennzeichnet**,
daß das erste Eingriffselement (48) von einem Gelenkbolzen und daß das zweite Eingriffselement (41) von einem mit einem Langloch (52) versehenen Hebel gebildet wird und daß der Gelenkbolzen (48) in das Langloch (52) des Hebels (41) eingreift.

6. Brotröster nach Anspruch 3,
**dadurch gekennzeichnet**,
daß der Zapfen (50) zusätzlich in einer in der Handhabe (6) ausgebildeten Bohrung (51) gelagert ist und daß an dem freien Ende des Zapfens (50) der Bedienknopf (8) ausgebildet ist.

7. Brotröster nach Anspruch 4 oder 5,
**dadurch gekennzeichnet**,
daß an dem oberen Bügelarm (32) des zweiten Halters (35) ein Zapfen (34) ausgebildet ist, der in einem am ersten Halter (29) in Längsrichtung der Führung (3) verlaufenden Längsschlitz (33) eingreift.

8. Brotröster nach Anspruch 1,
**dadurch gekennzeichnet**,
daß bei abgesenkten Schlitten (4) der Bedienknopf (8) der Nachhebvorrichtung (11) von der Außenwand des Gehäuses (1) verdeckt ist.

9. Brotröster nach Anspruch 1,
**dadurch gekennzeichnet**,
daß der Bedienknopf (8) in einer an der Handhabe (6) ausgebildeten Vertiefung (43) ausgebildet ist.

## Claims

1. A bread toaster with a carriage (4) manually slidable in a guide (3) between an upper and a lower limit position by means of a manual operating handle (6), with a toasting rack (2) adapted to receive an article to be toasted and moving in conjunction with the carriage (4), with the upper limit position of the carriage (4) serving to receive or withdraw the article, while the lower limit position serves for turning the power on and for toasting the article, and with an extra-lift device (11) operated by a separate control knob (8) to enable the toasting rack (2) to be raised relative to the carriage (4), with the extra-lift device (11) being carried by the carriage (4),
**characterized in that** the toasting rack (2) is movable by a first holding means (29) and the carriage (4) by a second holding means (35) along the guide (3), that the holding means (29, 35) are of a U-shaped configuration and provided with brackets (30 and 32, respectively) on either leg, that the brackets (30 and 32, respectively) are in such relative arrangement on the guide (3) that a bracket (32) of the second holding means (35) engages between the two brackets (30) of the first holding means (29), so as to enable a relative axial displacement of the two holding means (29, 35) within the span of the brackets (32).

2. The bread toaster as claimed in claim 1,
**characterized in that** the extra-lift device (11) is comprised of a lever (55) fixedly connected to the first holding means (29), and that the control knob (8) is attached to the lever (55).

3. The bread toaster as claimed in claim 1,
**characterized in that** the extra-lift device (11) includes a first engaging member (42, 48) provided on the first holding means (29), that the first engaging member (42, 48) engages in a second engaging member (41) rotatably coupled to the control knob (8), and that the second engaging member (41) is rotatably mounted on the carriage (4) by means of a trunnion (50) connected to it at right angles.

4. The bread toaster as claimed in claim 3,
**characterized in that** the first and second engaging member (42, 41) are toothed structures extending substantially in the direction of the guide (3).

5. The bread toaster as claimed in claim 3,
**characterized in that** the first engaging member (48) includes a joint bolt and the second engaging member (41) includes a lever with an elongated hole (52), and that the joint bolt (48) engages into the elongated hole (52) of the lever (41).

6. The bread toaster as claimed in claim 3,
**characterized in that** the trunnion (50) is additionally received in a bore (51) provided in the handle (6), and that the control knob (8) is at the free end of the trunnion (50).

7. The bread toaster as claimed in claim 4 or claim 5,
**characterized in that** a pin (34) is formed on the upper bracket (32) of the second holding means (35) for engagement in a longitudinal slot (33) extending on the first holding means (29) in the longitudinal direction of the guide (3).

8. The bread toaster as claimed in claim 1,
**characterized in that** the control knob (8) of the extra-lift device (11) is covered by the outer wall of the housing (1) when the carriage (4) is in the lowered position.

9. The bread toaster as claimed in claim 1,
**characterized in that** the control knob (8) is in a recess (43) provided on the handle (6).

## Revendications

1. Grille-pain comprenant un chariot (4) qui peut être manuellement déplacé au moyen d'une manette (6) dans un guidage (3) entre une position finale supérieure et une position finale inférieure, comprenant un porte-pain (2) qui se déplace conjointement avec le chariot (4) et sur lequel on peut poser du pain, la position finale supérieure du chariot (4) étant prévue pour mettre en place ou pour enlever le pain, tandis que la position finale inférieure sert pour la mise en route et pour le grillage du pain (22), et comprenant un dispositif de soulèvement (11) au moyen duquel on peut soulever le porte-pain (2) par rapport au chariot (4) au moyen d'un bouton de commande spécial (8), et le dispositif de soulèvement (11) étant porté par le chariot (4),
caractérisé en ce que le porte-pain (2) est susceptible d'être déplacé le long du guidage (3) au moyen d'un premier support (29), en ce que le chariot (4) est susceptible d'être déplacé le long du guidage (3) au moyen d'un second support (35), en ce que les supports (29, 35) sont réalisés en forme de U et sont dotés de bras (30 ; 32) au niveau de leurs deux ailes, en ce que les bras (30 ; 32) sont agencés sur le guidage (3) l'un par rapport à l'autre de telle manière qu'un bras (32) du second support (35) s'engage entre les deux bras (30) du premier support (29), de sorte qu'à l'intérieur de l'empattement des bras (32) il est possible de déplacer axialement les deux supports (29, 35) l'un par rapport à l'autre.

2. Grille-pain selon la revendication 1, caractérisé en ce que le dispositif de soulèvement (11) est constitué par un levier (55) qui est relié solidairement au premier support (29), et en ce que le bouton de commande (8) est monté sur le levier (55).

3. Grille-pain selon la revendication 1, caractérisé en ce que le dispositif de soulèvement (11) comprend un premier élément d'attaque (42, 48) réalisé sur le premier support (29), en ce que le premier élément d'attaque (42, 48) s'engage dans un second élément d'attaque (41) relié en rotation avec le bouton d'actionnement (8), et en ce que le second élément d'attaque (41) est monté en rotation sur le chariot (4) au moyen d'un tenon (50) qui est relié à celui-ci à angle droit.

4. Grille-pain selon la revendication 3, caractérisé en ce que le premier et le second élément d'attaque (42, 41) sont formés par une denture qui s'étend sensiblement dans la direction du guidage (3).

5. Grille-pain selon la revendication 3, caractérisé en ce que le premier élément d'attaque (48) est formé par une tige d'articulation, en ce que le second élément d'attaque (41) est formé par un levier pourvu d'un trou oblong (52), et en ce que la tige d'articulation (48) s'engage dans le trou oblong (52) du levier (41).

6. Grille-pain selon la revendication 3, caractérisé en ce que le tenon (50) est monté additionnellement dans un perçage (51) ménagé dans la manette (6), et en ce que le bouton d'actionnement (8) est réalisé à l'extrémité libre du tenon (50).

7. Grille-pain selon l'une ou l'autre des revendications 4 et 5, caractérisé en ce qu'un tenon (34) est réalisé sur le bras supérieur (32) du second support (35), ledit tenon (34) s'engageant dans une fente allongée (33) du premier support (29), qui s'étend dans la direction longitudinale du guidage (3).

8. Grille-pain selon la revendication 1, caractérisé en ce que lorsque le chariot (4) est abaissé le bouton d'actionnement (8) du dispositif de soulèvement (11) est recouvert par la paroi extérieure du boîtier (1).

9. Grille-pain selon la revendication 1, caractérisé en ce que le bouton d'actionnement (8) est réalisé dans un renfoncement (43) formé sur la manette (6).
